# EUROPÄISCHE PATENTSCHRIFT

(11) **EP 0 750 582 B1**
(45) Veröffentlichungstag und Bekanntmachung des Hinweises auf die Patenterteilung: **21.04.1999**
(21) Anmeldenummer: 94923646.7
(22) Anmeldetag: 11.08.1994
(51) Int. Cl.: B65G 47/54, B65G 1/06

(54) **LAGER- UND TRANSPORTSYSTEM FÜR LAGERGÜTER**
GOODS STORAGE AND CONVEYOR SYSTEM
SYSTEME DE STOCKAGE ET DE TRANSPORT POUR PRODUITS STOCKES

(30) Priorität: 14.08.1993 DE 4327445
(43) Veröffentlichungstag der Anmeldung: 02.01.1997
(73) Patentinhaber: Trauten, Karl, 55286 Wörrstadt (DE)
(72) Erfinder: BLUM, Albert, CH-2072 St. Blaise (CH); TRAUTEN, Karl, D-55286 Wörrstadt (DE)
(74) Vertreter: Lippert, Hans-Joachim, Dipl.-Ing.
(86) Internationale Anmeldenummer: DE9400924
(87) Internationale Veröffentlichungsnummer: WO9505330

(56) Entgegenhaltungen:
- EP-A- 0 329 600
- DE-A- 1 781 097
- DE-C- 3 920 405
- FR-A- 2 345 369
- PATENT ABSTRACTS OF JAPAN vol. 10, no. 40 (M-454) (2097) 18. Februar 1986 & JP,A,60 191 911 (MATSUSHITA DENKI SANGYO K.K.) 30. September 1985

## Beschreibung

Die Erfindung betrifft ein Lager- und Transportsystem für Lagergüter, bestehend aus zwei parallel zueinander angeordneten, gegenläufig fördernden, horizontalen Längsförderbahnen, deren Enden etwa miteinander fluchten, und einer bezüglich ihrer Förderrichtung quer zur Förderrichtung der Längsförderbahnen angeordneten, horizontalen Querförderbahn, die an einem Ende der Längsförderbahnen angeordnet ist, wobei die Querförderbahn aus mindestens zwei in Förderrichtung der Querförderbahn hintereinander und quer zu den Längsförderbahnen angeordneten Bahnbereichen besteht, deren Förderebenen zum kontinuierlichen Transport der Lagergüter von einer Längsförderbahn zur anderen getrennt in vertikaler Richtung über die Förderebene der Längsförderbahnen anhebbar bzw. unter sie absenkbar sind.

Ein gattungsgemäßes Lager- und Transportsystem ist aus der DE-A-1781097 bekannt. Bei dem bekannten System ist eine horizontale Querförderbahn vorgesehen, die über Gelenkhebel gehalten und über eine Lageänderung der Hebel anhebbar bzw. absenkbar ist.

Bei dem Lager- und Transportsystem gemäß der FR-A-7708247 ist eine Querförderbahn über ein Verschieben auf einer schiefen Ebene in vertikaler Richtung anhebbar und absenkbar.

Bei den bekannten Fördereinrichtungen ist eine kontinuierliche Übergabe der Lagergüter von den Längsförderbahnen auf die Querförderbahn und umgekehrt nicht möglich, da sich sonst die Winkellage der Transportgüter verändern würde. Die bekannten Anlagen müssen also notwendigerweise taktweise und damit mit vergleichsweise langsamer Transportgeschwindigkeit gefahren werden.

Andererseits besteht in der Lagertechnik bzw. bei innerbetrieblichen Transportsystemen häufig die Notwendigkeit, aus einem Lager ein bestimmtes Lagergut schnellstmöglich zu entnehmen und zu einem bestimmten Arbeits- oder Transportplatz zu befördern.

Dazu sind sogenannte Hochregallager gebaut worden, bei denen zwischen den einzelnen Lagerreihen Fahrrinnen für Entnahmefahrzeuge freigehalten werden müssen, so daß die Lagerung einen vergleichsweise großen Raumbedarf erfordert.

Der Erfindung liegt die Aufgabe zugrunde, ein Lager- und Transportsystem für Lagergüter zu schaffen, mit dem eine optimale Raumausnutzung innerhalb des Lagers möglich ist und der Transport zur Bereitstellung eines bestimmten Lagergutes an einem Entnahmeort innerhalb kurzer Zeit erfolgen kann.

Diese Aufgabe wird bei einem Lager- und Transportsystem nach dem Oberbegriff des Anspruchs 1 erfindungsgemäß dadurch gelöst, daß die Querförderbahn in Förderrichtung der Längsförderbahnen unabhängig von einem Anheben bzw. Absenken der Querförderbahn verfahrbar ist, wobei an den vorderen und hinteren Enden der Längsförderbahnen je eine quer zu den Längsförderbahnen angeordnete Querförderbahn vorgesehen ist, die gegenläufig laufen.

Darüber hinaus wird diese Aufgabe durch ein Lager- und Transportsystem für Lagergüter gemäß dem Oberbegriff des Patentanspruchs 12 gelöst, bei dem die Querförderbahn in Förderrichtung der Längsförderbahn unabhängig von einem Anheben bzw. Absenken des Bahnbereiches verfahrbar ist.

Eine Ausführungsform des erfindungsgemäßen Lager- und Transportsystems für Lagergüter besteht im wesentlichen aus zwei parallel zueinander angeordneten horizontalen Längsförderbahnen, auf denen eine Vielzahl von Lagerplätzen für die Lagergüter, beispielsweise Container vorgesehen sind. Die Entnahme bzw. die Eingabe von Lagergütern erfolgt jeweils am vorderen oder hinteren Ende der Längsförderbahnen. Befindet sich z.B. ein zu entnehmender Container unmittelbar vor den horizontalen Querförderbahnen, kann er auf diese übergeben und dort entnommen werden. Steht der gesuchte Behälter jedoch im inneren Bereich einer Längsförderbahn, so muß er, um dem Lagersystem entnommen werden zu können, zunächst bis zum Entnahmeende der jeweiligen Längsförderbahn transport werden. Dies geschieht in der Weise, daß die vor ihm stehenden Behälter bzw. Lagergüter in Förderrichtung bewegt werden und einzeln auf die entsprechenden Querförderbahnen übergeben werden. Auf den Querförderbahnen werden die Behälter in noch näher zu beschreibender Weise quer zur Förderrichtung der Längsförderbahnen transportiert und auf das benachbarte, gegenläufig laufende Längsförderband übergeben. Dieser Vorgang erfolgt jeweils an den Enden der beiden Längsförderbahnen in Form eines Ringtausches. Dadurch findet ein Platzwechsel der Lagergüter von einer Längsförderbahn auf die andere so oft statt, bis der gesuchte Behälter auf die Querförderbahn übergeben wird, von wo er durch Entnahmeeinrichtungen entnommen werden kann.

Beim Einsatz von ortsfesten Querförderbahnen wäre der Wechsel von einer Längsförderbahn auf die andere nur durch taktweisen Betrieb des Lager- bzw. Transportsystemes möglich. Ein kontinuierlicher und damit schnellerer Betrieb kann nun erfindungsgemäß dadurch erfolgen, daß die Querförderbahnen in Förderrichtung der Längsförderbahnen verfahrbar sind und aus mindestens zwei hintereinander angeordneten Bahnbereichen bestehen, deren Förderebenen getrennt in vertikaler Richtung anhebbar und absenkbar sind.

Im einzelnen erfolgt die Übergabe von einer Längsförderbahn auf die andere unter Zuhilfenahme der Querförderbahnen wie nachfolgend beschrieben:

Die aus zwei hintereinander angeordneten Bahnbereichen bestehenden Querförderbahnen befinden sich unmittelbar an den Enden der beiden Längsförderbahnen, wobei der Bahnbereich einer Querförderbahn, auf den der Lagercontainer von der Längsförderbahn übergeben werden soll, unter die Transportebene der entsprechenden Längsförderbahn abgesenkt ist. Sobald sich der Lagercontainer über dem abgesenkten Bahnbereich befindet, wird dieser über die Transportebene der Längsförderbahn angehoben, wobei sich die gesamte Querförderbahn anschließend von den Enden der Längsförderbahnen wegbewegt. Die Gescnwindigkeit der Verschiebung der Querförderbahnen ist dabei zweckmäßigerweise höher als die Fördergeschwindigkeit der Bahn, von der der Container übernommen wurde. Gleichzeitig mit der Bewegung der Querförderbahn in Förderrichtung erfolgt ein Quertransport des Lagergutes in Richtung zur benachbarten, gegenläufig laufenden Längsförderbahn, wobei der Container auf den zweiten Bahnbereich übergeben wird, dessen Förderebene im Gegensatz zu seinem benachbarten Bahnbereich noch unter die Förderebene der Längsförderbahnen abgesenkt ist. Sobald der Container sich so weit quer zur Förderrichtung der Längsförderbahnen bewengt hat, daß er von dem zweiten Bahnbereich der Querförderbahn übernommen werden kann, wird dieser angehoben, wobei gleichzeitig die Querförderbahn aus ihrer vom Ende der Längsförderbahn entferntesten Stellung wieder zurückfährt. Während sich die Querförderbahn wieder bis unter die Enden der Längsförderbahnen zurückbewegt, wird gleichzeitig der Container auf dem über die Transportebene der Längsförderbahnen angehobenen zweiten Bahnbereich quer zu den Längsförderbahnen in eine Übergabeposition gefördert, in der er auf die zweite Längsförderbahn übergeben werden kann. Durch Absenken des zweiten Bahnbereiches bzw. dessen Förderebene unter die Förderebene der zweiten Längsförderbahn übernimmt diese den Container, während sich gleichzeitig der erste Bahnbereich der Querförderbahn in abgesenkter Stellung befindet, so daß von der ersten Längsförderbahn der nächste Container übernommen werden kann. Dadurch kann nunmehr ein neuer Übergabezyklus beginnen.

Bei der beschriebenen Übergabe eines Containers von einer Längsförderbahn auf die benachbarte bei gleichzeitiger Bewegung der Querförderbahnen beschreibt der Container also eine kreisförmige Bahn, ohne seine Winkelstellung zu den Längsförderbahnen zu verändern. Dadurch ist die problemlose, kontinuierliche Übergabe der Container von einer Längsförderbahn auf die benachbarte möglich.

Aufgrund der kontinuierlichen Arbeitsweise kann ein bestimmter angeforderter Container oder auch ein beliebiges Lagergut auf schnellstmögliche Weise zur Entnahmestelle gefördert werden, ohne daß zwischen den als Lager dienenden Längsförderbahnen ein Fahrweg für eine Entnahmevorrichtung offengehalten werden muß.

Die problemlose Übergabe der Lagergüter von den Längsförderbahnen auf die Querförderbahnen wird durch die beiden Bahnbereiche der Querförderbahnen ermöglicht, deren Förderebenen getrennt über die Transportebene der Längsförderbahnen anhebbar bzw. unter diese absenkbar sind. Dadurch können die Bahnbereiche der Querförderbahnen die Enden der Längsförderbahnen untergreifen und, nachdem der entsprechende Bahnbereich über die Förderebene der übergebenden Längsförderbahn angehoben ist, den Container problemlos übernehmen.

Die einzelnen Förderbahnen können als endlos umlaufende Gurtförderer ausgebildet sein, es ist jedoch auch möglich, die Förderebenen der Bahnen durch eine Vielzahl von Rollen zu bilden, die einzeln oder getrennt angetrieben werden können und die Lagergüter auf ihren sich bewegenden oberen Umfangsbereichen weiterfördern.

Das erfindungsgemäße Lager- und Transportsystem kann in beliebiger Anordnung und Stückzahl neben- und/oder übereinander angeordnet sein, so daß beliebig große Lagerkapazitäten bei geringstem Raumbedarf erstellt werden können.

Das erfindungsgemäß Übergabeprinzip läßt sich selbstverständlich auch bei einem Transportsystem anwenden, bei dem eine Längsförderbahn als Lager- und Transportbahn dient und die Lagergüter kontinuierlich auf eine bezüglich ihrer Förderrichtung quer zu dieser Transportbahn angeordneten Querförderbahn übergeben werden sollen. Dabei ist die Querförderbahn an einem Ende der Längsförderbahn angeordnet und weist einen Bahnbereich auf, dessen Förderebene in vertikaler Richtung anhebbar und absenkbar ist, wobei die Querförderbahn wiederum in Förderrichtung der Längsförderbahn verfahrbar ist.

Bei diesem erfindungsgemäßen System muß die Querförderbahn natürlich nicht aus zwei getrennten Bahnbereichen bestehen, da eine kontinuierliche Übergabe an eine zweite Längsförderbahn nicht erforderlich ist.

Wie bereits erwähnt, ist es zweckmäßig, die Verfahrgeschwindigkeit der Querförderbahnen höher zu wählen als die Fördergeschwindigkeit der Längsförderbahnen. Dadurch werden die Fördergüter sehr rasch aus dem Bereich der übergebenden Längsförderbahn entfernt und quer zu den Längsförderbahnen weiterbefördert, ohne daß die Fördergeschwindigkeit der umlaufenden Längsförderbahnen verringert werden muß.

Zur Entnahme der in den Auslaufbereich geförderten Fördergüter können zweckmäßige Entnahmevorrichtungen vorgesehen sein, die z.B. als separate Hubeinrichtungen, Portalstapler oder ähnliches ausgebildet sein können. Entsprechendes gilt selbstverständlich auch für die Eingabe von neuen Lagergütern in das Lagersystem.

Zur Steuerung des gesamten Transportsystems ist es zweckmäßig, die einzelnen Lagergüter zu erfassen, zu identifizieren oder zu wiegen. Dies kann durch entsprechende Sensoren erfolgen, die beispielsweise im Bereich der Längsförderbahnen auf bestimmten Lagerplätzen angebracht sein können. Durch eine Kopplung der Sensoren mit einem Rechner kann auf diese Weise die Steuerung und Lagerverwaltung automatisch erfolgen und ein gesuchtes Lagergut auf Knopfdruck zur Entnahme bereitgestellt werden.

Durch die Möglichkeit, die einzelnen Lagergüter, die z.B. in Form von Behältern oder Containern andere Lagergüter enthalten können, im Lagersystem selber an bestimmten Stellen wiegen zu können, ist auch eine Teilentnahme aus einzelnen Behältern möglich, wobei durch eine Kopplung der Wiegevorrichtung an den Rechner ständig eine aktualisierte Inventur erfolgen kann.

Das erfindungsgemäße Lager- und Transportsystem bietet sich aufgrund der technischen Gegebenheiten in idealer Weise für eine sogenannte chaotische Lagerung an. Bei diesem Lagersystem werden die einzelnen Lagergüter willkürlich auf den nächsten freien Lagerplatz transportiert und dort gelagert, ohne daß bestimmte Produktgruppen nebeneinander angeordnet sein müssen. Dies ist, falls erforderlich, selbstverständlich durch entsprechende Rechnerprogramme auch möglich.

Die Erfindung wird in der Zeichnung beispielsweise veranschaulicht und im nachfolgenden anhand der Zeichnung im einzelnen erläutert. Es zeigen
- Figur 1: eine Draufsicht auf ein Lager- und Transportsystem, bei der sich die Querförderbahn in Übernahmestellung befindet,
- Figur 2: eine Seitenansicht gemäß Figur 1,
- Figur 3: eine Draufsicht auf das Lager- und Transportsystem, bei der sich die Querförderbahn von den Längsförderbahnen wegbewegt,
- Figur 4: eine Seitenansicht gemäß Figur 3,
- Figur 5: eine Draufsicht auf das Lager- und Transportsystem, bei der sich die Querförderbahn in ihrer von den Längsförderbahnen entferntesten Stellung befindet,
- Figur 6: eine Seitenansicht gemäß Figur 5,
- Figur 7: eine Draufsicht auf das Lager- und Transportsystem, bei der sich die Querförderbahn den Längsförderbahnen nähert,
- Fig. 8: eine Seitenansicht gemäß Fig. 7,
- Fig. 9: eine Seitenansicht gemäß der Situation aus Fig. 4 mit einer modifizierten Querförderbahn, und
- Fig. 10: eine Draufsicht auf ein Lager- und Transportsystem mit modifiziertem Antrieb.

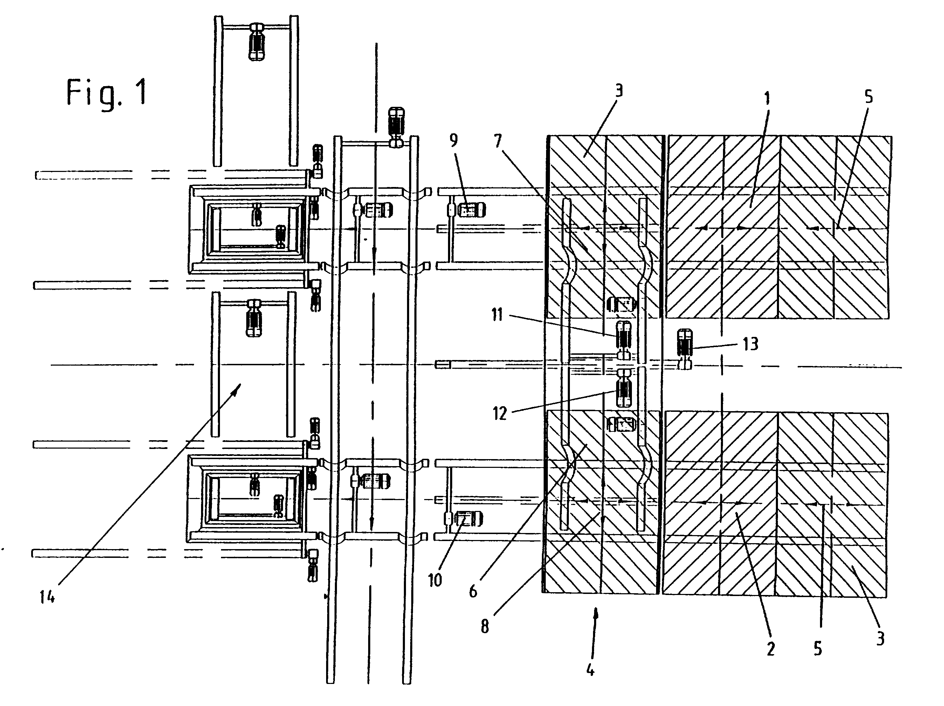

Das in einer Draufsicht in Fig. 1 schematisch dargestellte Lager- und Transportsystem besteht im wesentlichen aus zwei als Gurtförderer ausgebildeten Längsförderbahnen 1, 2 mit einer Vielzahl von Stellplätzen für quaderförmige Container 3. Am vorderen Ende 4 befindet sich quer zur Förderrichtung 5 eine Querförderbahn 6, die in Förderrichtung 5 verfahrbar ist. Die Förderrichtung 5 der Längsförderbahnen 1, 2 ist durch entsprechende Pfeile 5 gekennzeichnet. Bei der Verwendung als Transportsystem bewegen sich die Längsförderbahnen 1, 2 gegenläufig, wobei die jeweilige Laufrichtung im Prinzip beliebig gewählt werden kann.

Die Querförderbahn 6 unterfährt in der in Fig. 1 dargestellten Situation die Förderebene der Längsförderbahnen 1, 2 und dient zum Quertransport der Container 3 von der Längsförderbahn 1 zur Längsförderbahn 2.

Die Querförderbahn 6 besteht aus zwei hintereinander angeordneten Bahnbereichen 7, 8, deren Förderebenen in vertikaler Richtung einzeln unter die Förderebene der Längsförderbahnen 1, 2 absenkbar bzw. über die Förderebene der Längsförderbahnen 1, 2 anhebbar sind. Die Querförderbahn 6 ist ebenfalls als Gurtförderer mit endlos umlaufenden Gurten ausgebildet.

Zum Antrieb der Fördergurte der Längsförderbahnen 1, 2 dienen Motoren 9, 10. Weitere Motoren 11, 12 dienen zum Antreiben der Fördergurte der jeweiligen Bahnbereiche 7, 8. Durch weitere Motoren können die Bahnbereiche 7, 8 getrennt angehoben bzw. abgesenkt werden, während der Motor 13 für ein Verfahren der Querförderbahn 6 in Förderrichtung 5 sorgt.

Vor dem vorderen Ende 4 der Längsförderbahnen 1, 2 bzw. vor der Querförderbahn 6 befinden sich Eingabe- bzw. Entnahmevorrichtungen 14, mit denen Container 3 aus dem Lager- und Transportsystem entnommen bzw. eingegeben werden können. Die Entnahme- bzw. Eingabevorrichtungen 14 sind als verfahrbare Hubeinrichtungen ausgebildet.

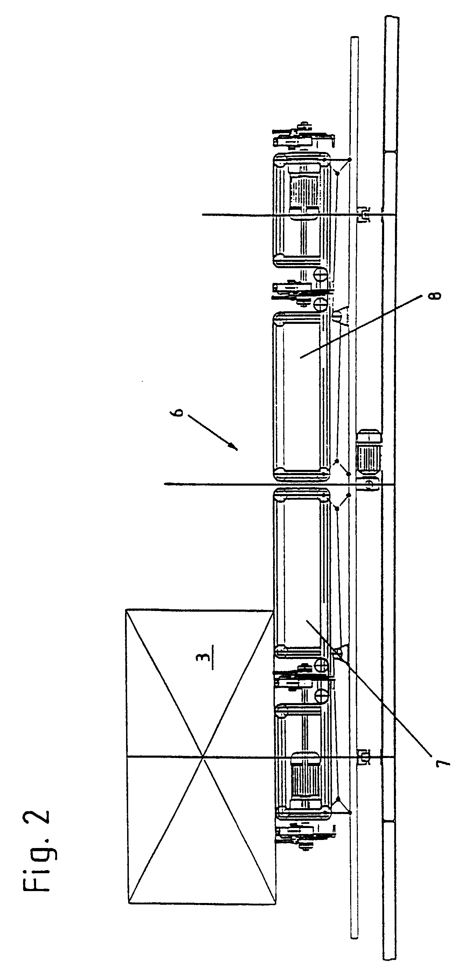

Zur Verdeutlichung der Stellung der Querförderbahn 6 bzw. der Bahnbereiche 7, 8 dient sie Seitenansicht gemäß Fig. 2. Die Querförderbahn 6 befindet sich am vorderen Ende 4 der Längsförderbahnen 1 und 2 (vgl. Fig. 1), wobei beide Bahnbereiche 7, 8, die getrennten Endlosgurtförderern bestehen, über die Transportebene der Längsförderbahnen 1, 2 angehoben sind. In dieser Stellung wird vom Bahnbereich 7 der Container 3 übernommen, während ein weiterer Container 3 vom Bahnbereich 8 auf die Längsförderbahn 2 abgegeben worden ist.

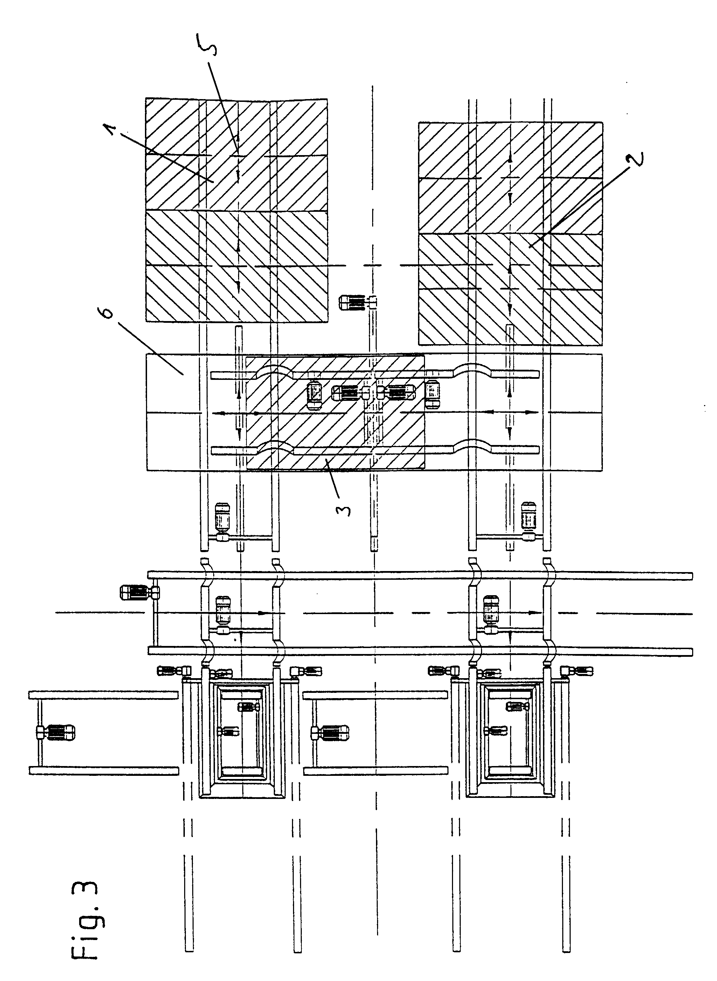

Bei der in Fig. 3 dargestellten Situation fährt die Querförderbahn 6 nach links in Förderrichtung 5 der Längsförderbahn 1. Dadurch wird der Container 3 von der Längsförderbahn 1 abgezogen. Da gleichzeitig durch die umlaufenden Fördergurte der Querförderbahn 6 ein Transport des Containers 3 in Richtung zur Längsförderbahn 2 erfolgt, bewegt sich der Container 3 zur Bildunterseite. Durch die gleichzeitige Bewegung in Förderrichtung 5 und quer dazu beschreibt der Container 3 also eine halbkreisförmige Bahn, ohne seine Winkellage zur Förderrichtung 5 zu verändern.

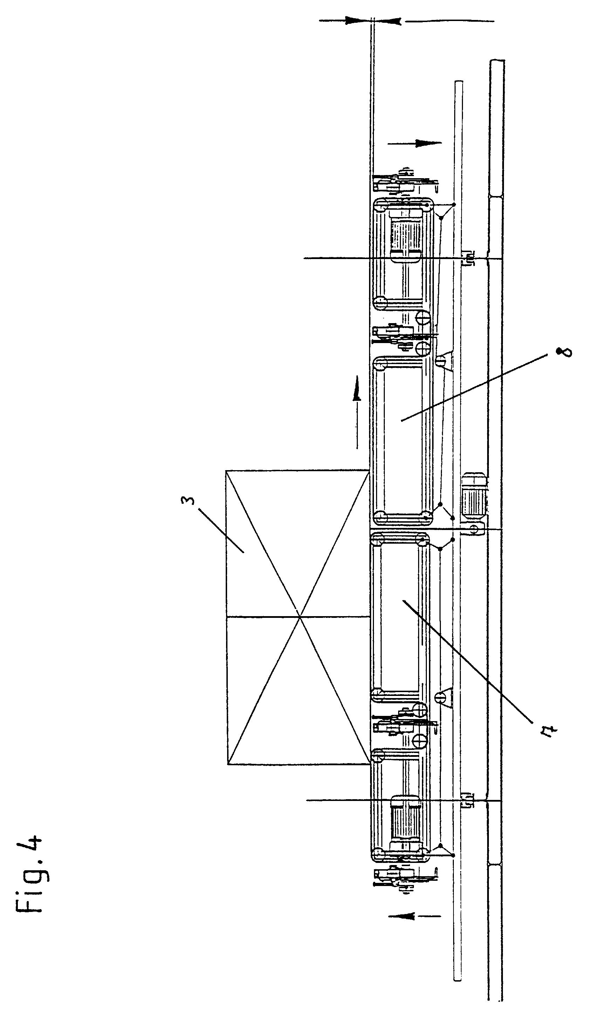

Die Hubstellung der Bahnbereiche 7, 8 in der in Fig. 3 gezeigten Situation ist Fig. 4 zu entnehmen. Der Bahnbereich 7 befindet sich noch oberhalb der Förderebene der Längsförderbahnen 1, 2, während der rechte Bahnbereich 8 unter die Förderebene abgesenkt ist.

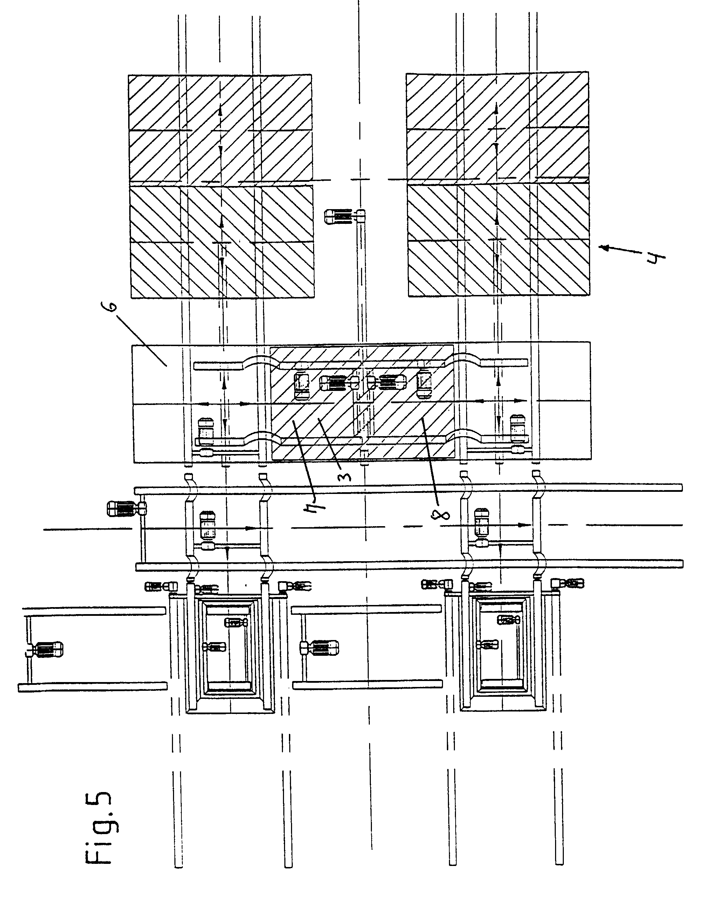

In Fig. 5 ist eine Situation dargestellt, in der der Container 3 sich in der Mitte zwischen den Bahnbereichen 7, 8 befindet.

Die Querförderbahn 6 ist gleichzeitig in die vom vorderen Ende 4 entfernteste Position vorgefahren. Der Container 3 hat in dieser Position einen Viertelkreisbogen beschrieben.

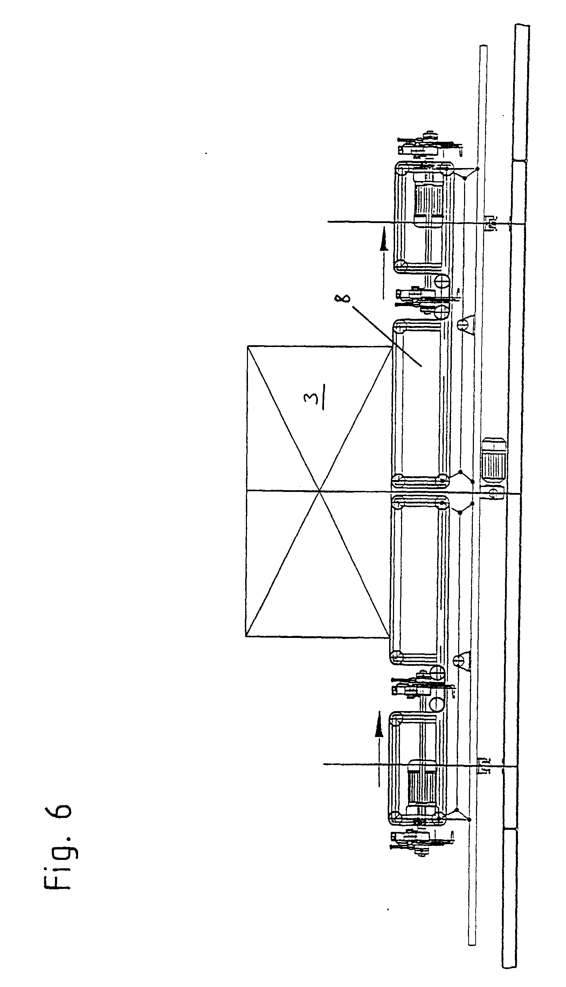

In der mittleren Position ist nunmehr auch der rechte Bahnbereich 8 zum Weitertransport des Containers 3 über die Förderebene der Längsförderbahnen 1, 2 angehoben (vgl. Fig. 6).

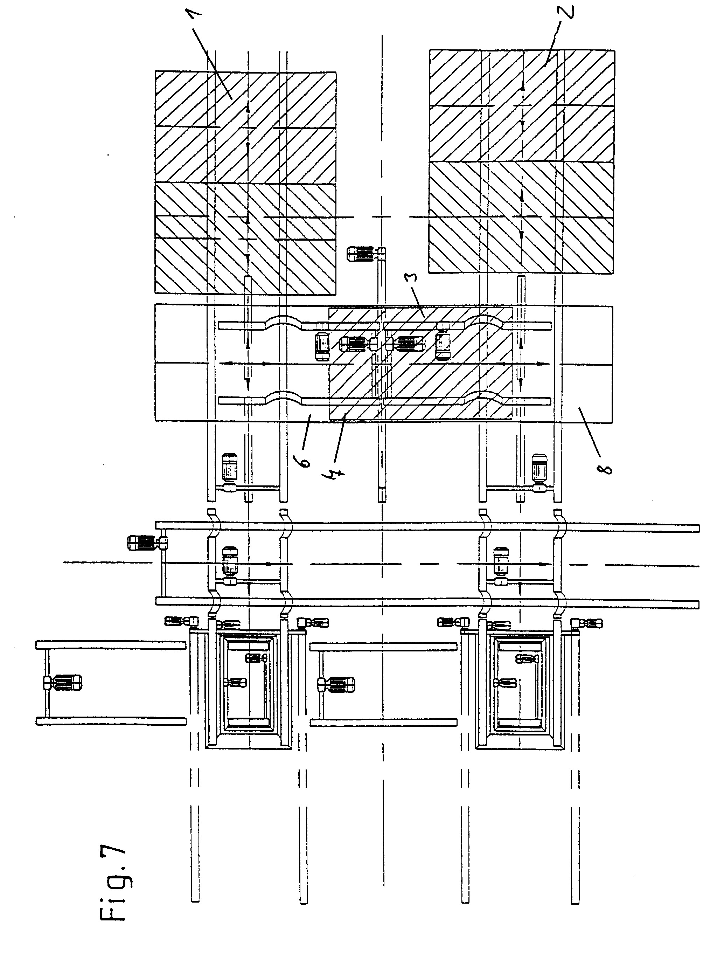

In Fig. 7 ist zu erkennen, daß der Container 3 bereits vom rechten Bahnbereich 8 erfaßt worden ist, der ihn in eine Stellung fördert, aus der er auf die Längsförderbahn 2 übergeben werden kann. Die Querförderbahn 6 fährt dabei zurück in Richtung auf das vordere Ende 4 der Längsförderbahnen 1, 2. Zur Übergabe des Containers 3 auf die Längsförderbahn 2 ist der Bahnbereich 8 angehoben, während der Bahnbereich ? sich abgesenkt hat, um den nächsten Container 3 von der Längsförderbahn 1 übernehmen zu können. Sobald ein neuer Container 3 auf den Bahnbereich 7 übergeben werden kann, wird dieser wiederum über die Förderebene der Längsförderbahnen 1, 2 angehoben und ein neuer Transportzyklus beginnt.

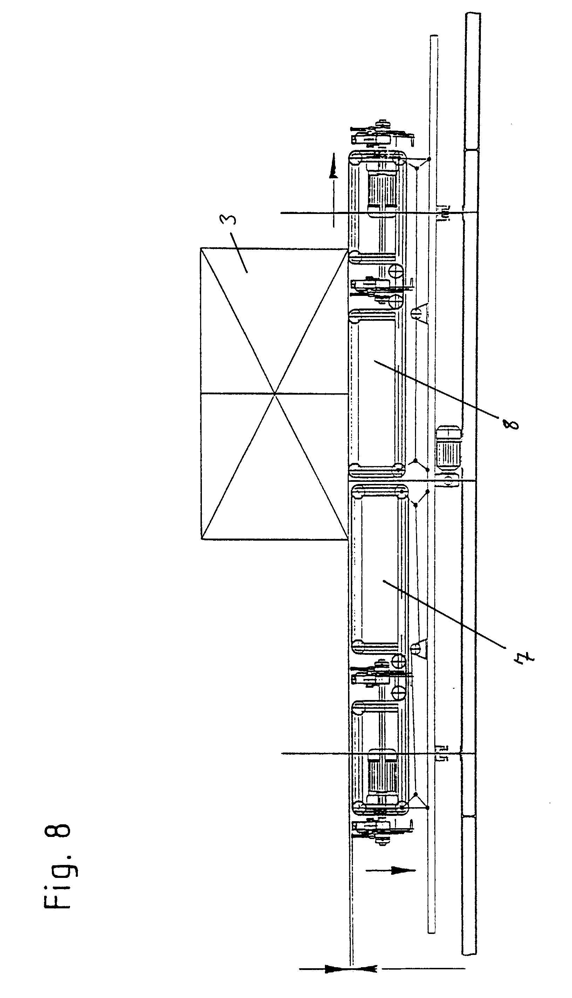

In den Fig. 1 bis 8 ist jeweils nur der linke Teil des Lager- und Transportsystemes dargestellt. Die Längsförderbahnen 1, 2 können im Prinzip beliebig lang sein und eine entsprechende große Anzahl von Lagerplätzen für die Container aufweisen. Am in den Zeichnungen nicht dargestellten rechten Ende der Längsförderbahnen 1, 2 sind entsprechende Querförderbahnen angeordnet bzw. entsprechende Entnahme- und Eingabevorrichtungen vorgesehen, so daß das System kontinuierlich ringtauschmäßig arbeiten kann und von beiden Seiten eine Entnahme bzw. Eingabe von Lagergütern möglich ist.

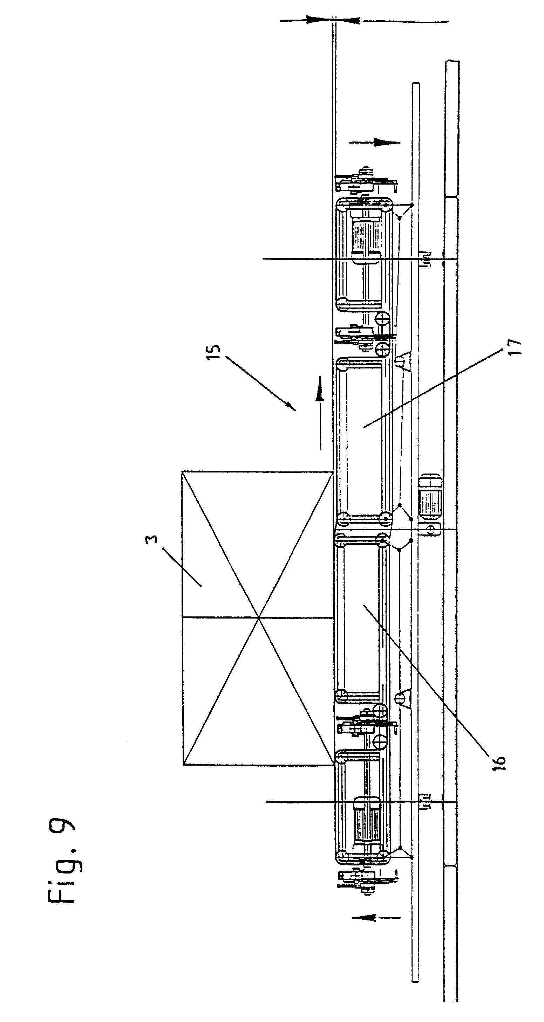

In Figur 9 ist eine Situation dargestellt, bei der sich der Container 3 in einer Position gemäß Figur 4 befindet. Im Gegensatz zu den getrennten Bahnbereichen 7, 8 in den Figuren 1 bis 8 ist hier die Querförderbahn 15 als durchgehender Gurtförderer mit den beiden getrennt anhebbaren bzw. absenkbaren Bahnbereichen 16, 17 bzw. Transportebenen ausgebildet.

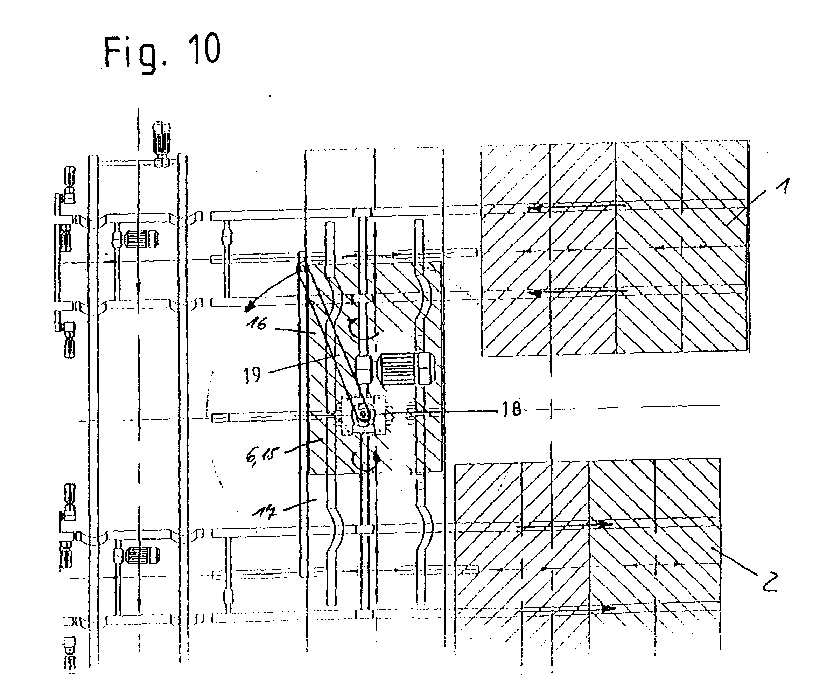

Bei der in Figur 10 dargestellten Antriebsvariante kann die Zahl der Antriebsmotoren auf einen bzw. zwei verringert werden. Dies wird durch ein angetriebenes Winkelgetriebe 18 erreicht, das mit den Längsförderbahnen 1, 2 zur Erzeugung eines synchronen Gegenlaufes über Zahnriemen verbunden ist. Vom Winkelgetriebe 18 wird mit passender Untersetzung ein Hebelarm 19 angetrieben, der durch seine Rotationsbewegung die Querförderbahn 6, 15 in Richtung der Längsförderbahnen 1, 2 hin- und herbewegt und gleichzeitig den Quertransport bewirkt. Durch zwei unterhalb des Winkelgetriebes angeordnete Nockenscheiben können die Bahnbereiche 7, 8 bzw. 16, 17 bei umlaufender Achse des Winkelgetriebes angehoben und abgesenkt werden.

### Bezugszeichenliste

- 1, 2: Längsförderbahn
- 3: Container
- 4: vorderes Ende
- 5: Förderrichtung
- 6: Querförderbahn
- 7, 8: Bahnbereich
- 9, 10: Motor
- 11, 12: Motor
- 13: Motor
- 14: Entnahme-/Eingabevorrichtung
- 15: Querförderbahn
- 16, 17: Bahnbereich
- 18: Winkelgetriebe
- 19: Hebelarm

## Patentansprüche

1. Lager- und Transportsystem für Lagergüter (3), bestehend aus zwei parallel zueinander angeordneten, gegenläufig fördernden, horizontalen Längsförderbahnen (1,2), deren Enden etwa miteinander fluchten und einer bezüglich ihrer Förderrichtung quer zur Förderrichtung der Längsförderbahnen (1,2) angeordneten, horizontalen Querförderbahn (6), die an einem Ende der Längsförderbahnen (1,2) angeordnet ist, wobei die Querförderbahn (6) aus mindestens zwei in Förderrichtung der Querförderbahn (6) hintereinander und quer zu den Längsförderbahnen (1,2) angeordneten Bahnbereichen (7,8) besteht, deren Förderebenen zum kontinuierlichen Transport der Lagergüter (3) von einer Längsförderbahn zur anderen getrennt in vertikaler Richtung über die Förderebene der Längsförderbahnen (1,2) anhebbar bzw. unter sie absenkbar ist, **dadurch gekennzeichnet**, daß die Querförderbahn (6) in Förderrichtung der Längsförderbahnen (1, 2) unabhängig von einem Anheben bzw. Absenken der Querförderbahn (6) verfahrbar ist, wobei an den vorderen und hinteren Enden der Längsförderbahnen (1,2) je eine quer zu den Längsförderbahnen (1,2) angeordnete Querförderbahn (6) vorgesehen ist, die gegenläufig laufen.

2. Lager- und Transportsystem nach Anspruch 1, **dadurch gekennzeichnet**, daß die Längsförderbahnen (1, 2) und/oder Querförderbahnen (6) als endlos umlaufende Gurtförderer ausgebildet sind.

3. Lager- und Transportsystem nach Anspruch 1, **dadurch gekennzeichnet**, daß die Längsförderbahnen (1, 2) und/oder Querförderbahnen (6) als Rollenförderer ausgebildet sind.

4. Lager- und Transportsystem nach einem der Ansprüche 1 bis 3, **dadurch gekennzeichnet,** daß mehrere Lager- und Transportsysteme neben- und/oder übereinander vorgesehen sind.

5. Lager- und Transportsystem nach einem der Ansprüche 1 bis 4, **dadurch gekennzeichnet,** daß die Verfahrgeschwindigkeit der Querförderbahnen (6) in Förderrichtung (5) der Längsförderbahnen (1, 2) höher als die Fördergeschwindigkeit der Längsförderbahnen (1, 2) ist.

6. Lager- und Transportsystem nach einem der Ansprüche 1 bis 5, **dadurch gekennzeichnet,** daß jeweils vor bzw. hinter den Querförderbahnen (6) Entnahme- bzw. Eingabevorrichtungen (14) zum Entnehmen bzw. Eingeben einzelner Lagergüter (3) aus bzw. in das Lager- und Transportsystem vorgesehen sind.

7. Lager- und Transportsystem nach einem der Ansprüche 1 bis 6, **dadurch gekennzeichnet,** daß die Entnahme- bzw. Eingabevorrichtungen (14) als Hubeinrichtungen ausgebildet sind.

8. Lager- und Transportsystem nach Anspruch 7, **dadurch gekennzeichnet**, daß die Hubeinrichtungen als Portalstapler ausgebildet sind.

9. Lager- und Transportsystem nach einem der Ansprüche 1 bis 8, **dadurch gekennzeichnet,** daß zur Steuerung der Längsförderbahnen (1, 2) und Querförderbahnen (6) bzw. der Entnahme- und Eingabevorrichtungen (14) Sensoren zur Erfassung, Identifizierung oder Wägung der einzelnen Lagergüter (3) vorgesehen sind.

10. Lager- und Transportsystem nach Anspruch 9, **dadurch gekennzeichnet**, daß die Sensoren zur Steuerung und Lagerverwaltung mit einem Rechner gekoppelt sind.

11. Lager- und Transportsystem nach einem der Ansprüche 1 bis 10, **dadurch gekennzeichnet**, daß die Anordnung der Lagergüter (3) auf den Längsförderbahnen (1, 2) einem chaotischen Lagersystem entspricht.

12. Lager- und Transportsystem für Lagergüter (3), mit einer horizontalen Längsförderbahn und einer bezüglich ihrer Förderrichtung quer zur Förderrichtung der Längsförderbahn angeordneten, horizontalen Querförderbahn, die an einem Ende der Längsförderbahn angeordnet ist, wobei die Querförderbahn zum kontinuierlichen Transdport der Lagergüter (3) mindestens einen in vertikale Richtung über die Förderebene der Längsförderbahn anhebbar bzw. unter sie absenkbaren Bahnbereich aufweist, **dadurch gekennzeichnet**, daß die Querförderbahn in Förderrichtung der Längsförderbahn unabhängig von einem Anheben bzw. Absenken des Bahnbereiches verfahrbar ist.

## Claims

1. A storage and conveying system for stored goods (3), consisting of two horizontal longitudinal conveyor lines (1, 2) arranged parallel to each other and conveying in opposite directions, the ends of which lie approximately flush with each other, and a horizontal cross-conveyor line (6) which is arranged with its conveying direction at right angles to the conveying direction of the longitudinal conveyor lines (1, 2) and is located at one end of the longitudinal conveyor lines (1, 2), the cross-conveyor line (6) consisting of at least two line sections (7, 8) arranged one behind the other in the conveying direction of the cross-conveyor line (6) and at right angles to the longitudinal conveyor lines (1, 2), the conveying planes of which line sections (7, 8) can be separately raised and lowered in the vertical direction above and below the conveying plane of the longitudinal conveyor lines (1, 2) for continuous transport of the stored goods (3) from one longitudinal conveyor line to the other, characterised in that the cross-conveyor line (6) is movable in the conveying direction of the longitudinal conveyor lines (1, 2) independently of a raising or lowering of the cross-conveyor line (6), a respective cross-conveyor line (6) arranged at right angles to the longitudinal conveyor lines (1, 2) being provided at the front and rear ends of the longitudinal conveyor lines (1, 2), which cross-conveyor lines (6) run in opposite directions.

2. A storage and conveying system according to claim 1, characterised in that the longitudinal conveyor lines (1, 2) and/or the cross-conveyor lines (6) are designed as endlessly circulating belt conveyors.

3. A storage and conveying system according to claim 1, characterised in that the longitudinal conveyor lines (1, 2) and/or the cross-conveyor lines (6) are designed as roller conveyors.

4. A storage and conveying system according to any one of claims 1 to 3, characterised in that several storage and conveying systems are provided next to and/or above one another.

5. A storage and conveying system according to any one of claims 1 to 4, characterised in that the travelling speed of the cross-conveyor lines (6) in the conveying direction (5) of the longitudinal conveyor lines (1, 2) is higher than the conveying speed of the longitudinal conveyor lines (1, 2).

6. A storage and conveying system according to any one of claims 1 to 5, characterised in that retrieval and storing devices (14) for retrieving and storing individual stored goods (3) from and in the storage and conveying system are provided in front of or behind the cross-conveyor lines (6).

7. A storage and conveying system according to any one of claims 1 to 6, characterised in that the retrieval and storing devices (14) are designed as lifting devices.

8. A storage and conveying system according to claim 7, characterised in that the lifting devices are designed as straddle loaders.

9. A storage and conveying system according to any one of claims 1 to 8, characterised in that sensors for detecting, identifying or weighing the individual stored goods (3) are provided for controlling the longitudinal conveyor lines (1, 2) and cross-conveyor lines (6) and the retrieval and storing devices (14).

10. A storage and conveying system according to claim 9, characterised in that the sensors are coupled to a computer for control purposes and warehouse management.

11. A storage and conveying system according to any one of claims 1 to 10, characterised in that the arrangement of the stored goods (3) on the longitudinal conveyor lines (1, 2) corresponds to a chaotic storage system.

12. A storage and conveying system for stored goods (3), comprising a horizontal longitudinal conveyor line and a horizontal cross-conveyor line which is arranged with its conveying direction at right angles to the conveying direction of the longitudinal conveyor line and is located at one end of the longitudinal conveyor line, the cross-conveyor line having at least one line section which can be raised and lowered in the vertical direction above and below the conveying plane of the longitudinal conveyor line for continuous transport of the stored goods (3), characterised in that the cross-conveyor line is movable in the conveying direction of the longitudinal conveyor line independently of a raising or lowering of the line section.

## Revendications

1. Système de stockage et de transport pour des marchandises (3), constitué de deux voies de transport longitudinales horizontales (1, 2) disposées parallèlement l'une à l'autre et avançant dans des sens opposés, dont les extrémités sont sensiblement dans l'alignement l'une de l'autre, et d'une voie de transport transversale horizontale (6), qui est disposée de telle sorte que sa direction de transport soit transversale à la direction de transport des voies de transport longitudinales (1, 2) et qui est située à une extrémité des voies de transport longitudinales (1, 2), la voie de transport transversale (6) étant constituée d'au moins deux tronçons de voie (7, 8) qui sont disposés l'un à la suite de l'autre, dans la direction de transport de la voie de transport transversale (6), et transversalement aux voies de transport longitudinales (1, 2) et dont les plans de transport, en vue du transfert en continu des marchandises (3) d'une voie de transport longitudinale à l'autre, peuvent être séparément relevés, en direction verticale, au-dessus du plan de transport des voies de transport longitudinales (1, 2) ou abaissés, en direction verticale, au-dessous de ces derniers, caractérisé en ce que la voie de transport transversale (6) est déplaçable dans la direction de transport des voies de transport longitudinales (1, 2), indépendamment d'un relèvement ou d'un abaissement de la voie de transport transversale (6), des voies de transport transversales (6) disposées transversalement aux voies de transport longitudinales (1, 2) étant alors prévues respectivement à l'extrémité avant et à l'extrémité arrière des voies de transport longitudinales (1, 2), ces voies de transport transversales (6) ayant des sens de circulation opposés.

2. Système de stockage et de transport selon la revendication 1, caractérisé en ce que les voies de transport longitudinales (1, 2) et/ou les voies de transport transversales (6) sont conçues sous la forme de transporteurs à courroie mobile sans fin.

3. Système de stockage et de transport selon la revendication 1, caractérisé en ce que les voies de transport longitudinales (1, 2) et/ou les voies de transport transversales (6) sont conçues sous la forme de transporteurs à rouleaux.

4. Système de stockage et de transport selon l'une des revendications 1 à 3, caractérisé en ce que plusieurs systèmes de stockage et de transport sont prévus côte à côte et/ou l'un au-dessus de l'autre.

5. Système de stockage et de transport selon l'une des revendications 1 à 4, caractérisé en ce que la vitesse de déplacement des voies de transport transversales (6), dans la direction de transport (5) des voies de transport longitudinales (1, 2), est supérieure à la vitesse de transport des voies de transport longitudinales (1, 2).

6. Système de stockage et de transport selon l'une des revendications 1 à 5, caractérisé en ce qu'en avant et en arrière respectivement des voies de transport transversales (6), sont prévus des dispositifs respectifs de prélèvement et d'introduction (14), destinés à retirer des marchandises individuelles (3) du système de stockage et de transport ou à en introduire dans ce dernier.

7. Système de stockage et de transport selon l'une des revendications 1 à 6, caractérisé en ce que les dispositifs de prélèvement et d'introduction (14) sont conçus sous la forme d'appareils de levage.

8. Système de stockage et de transport selon la revendication 7, caractérisé en ce que les appareils de levage sont conçus sous la forme de portiques élévateurs.

9. Système de stockage et de transport selon l'une des revendications 1 à 8, caractérisé en ce que des capteurs, destinés à détecter, à identifier ou à peser les marchandises individuelles (3), sont prévus pour la commande des voies de transport longitudinales (1, 2) et des voies de transport transversales (6) ainsi que, le cas échéant, des dispositifs de prélèvement et d'introduction (14).

10. Système de stockage et de transport selon la revendication 9, caractérisé en ce que les capteurs sont couplés à un ordinateur, pour la commande et pour la gestion des stocks.

11. Système de stockage et de transport selon l'une des revendications 1 à 10, caractérisé en ce que la disposition des marchandises (3) sur les voies de transport longitudinales (1, 2) correspond à un système de stockage en désordre.

12. Système de stockage et de transport pour des marchandises (3), comportant une voie de transport longitudinale horizontale et une voie de transport transversale horizontale, qui est disposée de telle sorte que sa direction de transport soit transversale à la direction de transport de la voie de transport longitudinale et qui est située à une extrémité de la voie de transport longitudinale, la voie de transport transversale, en vue de l'acheminement en continu des marchandises (3), présentant alors au moins un tronçon de voie qui peut être relevé, en direction verticale, au-dessus du plan de transport de la voie de transport longitudinale ou abaissé, en direction verticale, au-dessous de ce dernier, caractérisé en ce que la voie de transport transversale est déplaçable dans la direction de transport de la voie de transport longitudinale, indépendamment d'un relèvement ou d'un abaissement du tronçon de voie.
